# EUROPÄISCHE PATENTSCHRIFT

(11) **EP 2 377 005 B1**
(45) Veröffentlichungstag und Bekanntmachung des Hinweises auf die Patenterteilung: **17.12.2014**
(21) Anmeldenummer: 10702592.6
(22) Anmeldetag: 14.01.2010
(51) Int. Cl.: G06F 3/042

(54) **MULTITOUCH-BEDIENFELD**
MULTITOUCH CONTROL PANEL
PANNEAU DE COMMANDE À TOUCHES MULTIPLES

(30) Priorität: 14.01.2009 DE 102009004984
(43) Veröffentlichungstag der Anmeldung: 19.10.2011
(73) Patentinhaber: Citron GmbH, 86165 Augsburg (DE)
(72) Erfinder: THANNER, Thomas, 86399 Bobingen (DE)
(74) Vertreter: Puschmann Borchert Bardehle Patentanwälte Partnerschaft mbB
(86) Internationale Anmeldenummer: PCT/EP2010/000171
(87) Internationale Veröffentlichungsnummer: WO 2010/081702

(56) Entgegenhaltungen:
- US-A1- 2002 067 348
- US-A1- 2004 140 960
- US-A1- 2006 097 989
- US-A1- 2008 029 691

## Beschreibung

Die Erfindung betrifft ein Verfahren zur Erzeugung eines Quellbilds zur Abbildung von Touchmitteln auf einem optischem Multitouch-Bedienfeld nach der im Oberbegriff des Anspruchs 1 angegebenen Art

Ein bewährtes Mittel der Mensch-Maschine-Kommunikation funktioniert über die Bewegung eines Eingabemittels welches z.B. als Cursor an einem Monitor abgebildet wird. Dafür ist entweder die Kenntnis der Position oder die Bewegungsrichtung und Geschwindigkeit des Eingabemittels notwendig. Eine immer weitere Verbreitung in der Mensch-Maschine-Kommunikation finden so genannte Touch-Bedienfelder. Beispielsweise sind Tasten an einem Monitor dargestellt, die durch Berührung des Monitors mittels eines Touchmittels, z.B. Finger oder Stift, an dieser Stelle virtuell gedrückt werden können. In der Regel sind verschiedene Bereiche einer Anzeigeoberfläche mit unterschiedlichen Funktionen belegt Die Anzeigeoberfläche kann auch dynamisch interaktiv gestaltet sein. Eine Weiterentwicklung von Touch-Bedienfeldern stellen Multitouch-Bedienfelder dar.

Ein Multitouch-Bedienfeld dient dazu, die Position mindestens eines aber insbesondere mehrerer Touchmittel in einem vorgegebenen Bereich aufzunehmen, um diese vorzugsweise an einem Anzeigeelement abzubilden. Besonders erstrebenswert ist es ein Touch-Bedienfeld direkt über der Anzeigeoberfläche oder in der Anzeigeoberfläche integriert anzubringen.

Bekannt sind Touch-Bedienfelder für die gleichzeitige Erkennung von einer oder zwei Berührungen die mittels Infrarot-Strahlung arbeiten. Emitter und Sensoren, welche einander gegenüberliegend angeordnet sind, bilden ein X-Y-Gitternetz. Einem Emitter liegt auf diese Weise genau ein Sensor gegenüber.

Die WO 01/40922A2 offenbart eine Anordnung, bei welcher je eine Seite mit Emittern und die gegenüberliegende Seite mit Sensoren belegt ist Um eine bessere Auflösung zu erreichen, beleuchten die Emitter auch die benachbarten Sensoren des dem Emitter gegenüberliegenden Sensors. Das Licht-Gitternetz liegt minimal beabstandet über der Anzeigeoberfläche und wird bei Berührung der Anzeigeoberfläche durch ein Touchmittel, in der Regel Finger oder Stift, unterbrochen. Anhand der durch das Touchmittel unterbrochenen Strahlen erlangt man Kenntnis über die Koordinate der Unterbrechung. Vorteilhaft ist, dass diese Ausführungsform in einem Rahmen auf jedes beliebige Medium gesetzt werden kann und durch die Infrarot-Technologie weitgehend unabhängig von der Beschaffenheit des Touchmittels ist Diese Ausführung hat jedoch den Nachteil, dass die Positionen von maximal zwei Touchmitteln gleichzeitig bestimmbar sind.

Um mehrere Touchmittel abzubilden, sind sowohl kapazitive, resistive, als auch optische Lösungen bekannt

Ein verbreitetes optisches Verfahren ist das "Frustrated Total Internal Reflektion" FTIR-Verfahren. Dabei wird seitlich in Plexiglas eingestrahltes Licht an den Oberflächen gegen Luft total reflektiert. Durch eine Berührung der Oberfläche mit einem Touchmittel wird das Licht am Berührpunkt diffus und dringt durch die Oberfläche. Hinter dem Plexiglas ist beabstandet eine Kamera angebracht, welche die durch die diffuse Strahlung entstehenden Lichtpunkte aufzeichnet Bei dieser Form der Verfolgung wird von der Kamera ein Quellbild vom Detektionsbereich erzeugt, in dem die Berührpunkte aufgrund der diffusen Abstrahlung als helle Punkte abgebildet werden. Ein solches Verfahren wird unter anderem durch die US 2008 / 0029691 A1 beschrieben.
Dieses Verfahren hat den Vorteil, dass durch eine einfache Bildverarbeitungssoftware (Tracking-Software), die Positionen der Berührpunkte in Echtzeit aus dem Quellbild ausgewertet werden können.

Dieses Verfahren hat jedoch den Nachteil, dass die Erzeugung des Quellbilds sehr aufwendig ist. Zum einen muss eine Beleuchtungsanordnung um die Kante des Bedienfelds angeordnet sein, zum anderen muss eine vom Bedienfeld beabstandete Kamera angebracht werden, die das Quellbild letztendlich erzeugt

Diese Ausführungsform bietet zwar die Möglichkeit der gleichzeitigen Abbildung und Verfolgung mehrerer Touchmittel durch ein optisches Verfahren, weist aber durch das notwendige Kamerasystem eine niedrige Flexibilität und einen großen Bauraum auf.

Zudem offenbart die WO 2006/095320 A2 ein Verfahren, bei welchem die Flächen zwischen zwei ununterbrochenen Strahlenpfaden und zwei durch Touchmittel unterbrochenen Strahlenpfaden für alle vor handenen Sensoren analysiert werden. In diesem Verfahren werden Flächen zwischen den nicht unterbrochenen Strahlenpfaden und zwischen den zu den nicht unterbrochenen Strahlenpfaden nächstliegenden unterbrochenen Strahlenpfaden gebildet Die Positionen der Touchmittel in der Detektionsfläche werden durch die Bildung der Schnittflächen errechnet. Dieses Verfahren benötigt einen aufwendigen Auswertealgorithmus, und eine große Anzahl an Daten muss verarbeitet werden, was zu einer hohen notwendigen Rechenleistung führt Eine standardisierte Software zur Detektion und Verfolgung der Position von Touchmitteln kann in diesem Verfahren nicht eingesetzt werden.

Ferner offenbart die US 2006/ 0097989 A1 ein Multitouch - Bedienfeld, welches Infrarotquellen und Empfänger umfasst Durch eine Strahlungsdichteverteilung werden in den Strahlungsbereich eingebrachte Touchmittel einer virtuellen Koordinate zugeordnet. Die Genauigkeit der Bestimmung ist abhängig von der Potenz der Gleichung zur Analyse der Strahlungsverteilung. Dies erfordert aufwändige berechnungen.

Die US 2004 / 01140960 A1 offenbart eine Anordnung zur Erkennung eines einzigen Touchmittels durch eine Infrarotlichtquellen Schaltungsabfolge, bei welcher zuerst der Touchpunkt grob lokalisiert wird, und im Anschluss in dem ermittelten Bereich noch ein Fein-Scan ausgeführt wird. Die Position des Touchmittels welches durch unterbrochene Strahlen begrenzt wird ermittelt Dieses Verfahren ist lediglich für ein Touchmittel ausgelegt und nicht multitouchfähig.

Der Erfindung liegt die Aufgabe zugrunde, ein Verfahren und ein Mulitouch-Bedienfeld nach dem Oberbegriff des Anspruches 1 derart weiterzubilden, dass die Position von mindestens einem, insbesondere mehrerer Objekte in einem Detektionsbereich in einem Quellbild aufwandsarm abzubilden und damit eine flexible Anwendung zu gewährleisten.

Diese Aufgabe wird für das Verfahren durch die kennzeichnenden Merkmale des Anspruches 1 in Verbindung mit seinen Oberbegriffsmerkmalen gelöst

Weitere vorteilhafte Ausgestaltungen der Erfindung bilden die Gegenstände der Unteransprüche.

Bekannt ist ein Verfahren zur Positionsbestimmung eines Touchmittels in einem Detektionsbereich, bei dem ein Quellbild erzeugt wird, welches die Position und weitestgehend auch die Größe eines Touchmittels im Detektionsbereich wiedergibt Die Erzeugung des Quellbildes erfolgt durch das seitlich Einbringen von Strahlung in ein Bedienfeld, wobei durch Berührung des Bedienfelds die diffuse Strahlung an der dem Druckpunkt gegenüberliegenden Oberfläche austritt. Diese Strahlung erzeugt einen starken Kontrast zur restlichen Bedienfeldoberfläche. Das dadurch entstehende Bild wird von einem optischen Bildaufnahmegerät, beispielsweise einer Kamera in ein digitales Quellbild umgesetzt

Erfindungsgemäß wird das Quellbild dadurch erzeugt, dass mittels der Aktivierung von Emittern, die um einen Detektionsbereich angeordnet sind und deren Strahlung auf ebenfalls um den Detektionsbereich angeordnete Sensoren trifft, ein Strahlennetz aus sich kreuzenden Strahlenfaden erzeugt wird. Aus der Information, ob zugeordnete Strahlenpfade zwischen Emittern und Sensoren unterbrochen sind oder nicht, wird ein Quellbild, das die Position der in den Detektionsbereich eingebrachten Touchmittel wiedergibt, erzeugt

Weitgehend kann auch die Form der in den Detektionsbereich eingebrachten Touchmittel abgebildet werden.

Insbesondere wird das Quellbilds nur virtuell erzeugt Eine standardisierte Auswerte-Methode (Tracking-Software) kann anhand dieses Quellbildes die Positionierung der Touchmittel und deren Nachverfolgung übernehmen.

Im Einzelnen werden die Emitter abhängig von der Größe des Detektionsbereichs, des Abstrahlwinkels der Emitter und der Anzahl von Emittern und Sensoren entsprechenden Sensoren zugeordnet. Befindet sich kein Touchmittel im Detektionsbereich, detektieren die, einem Emitter zugeordneten Sensoren bei dessen Aktivierung von Emitter ausgehenden Strahlung über einen bestimmten Schwellwert. Mindestens die einem aktivierten Emitter zugeordneten Sensoren sind zum Detektionszeitraum ebenfalls aktiviert Ist ein Strahlenpfad von einem Emitter zu einem zugeordneten Sensor unterbrochen, detektiert diese Strahlung unter einem festgelegten Schwellwert. Die Sensoren werden bezüglich der von ihnen detektierten Strahlungsintensität ausgewertet.

Durch dieses Verfahren wird die Erzeugung eines für die Positionsbestimmung von Touchmittel notwendigen Quellbilds auf einfache, sehr kompakte und robuste Weise möglich. Basierend auf einem derart erzeugten Quellbild, kann mittels einer Tracking-Software die Position des Touchmittels einfach verfolgt werden. Daraufhin kann eine Interaktion mit dem Anzeigemedium, das dem Multitouch erfolgen.

Insbesondere wird das Quellbild als Rasterfeld erzeugt Das Rasterfeld ist abhängig von der Geometrie des Detek6onsbereichs. Die Größe der Rasterfelder ist dabei abhängig von der Anzahl der Emitter und Sensoren und entsprechend dem entstehenden Strahlennetz.

Es wird zur Verknüpfung der physikalischen Position mit einer virtuellen Curserposi6on ein virtuelles Raster über dem Detektionsbereich erzeugt Den Rasterfeldern sind Werte zugeordnet, die auf Null initialisiert werden. Das Strahlennetz mit seinen Strahlenpfaden wird auf das Raster abgebildet. Dies erfolgt insbesondere über den Bresenham-Algorithmus. Die Strahlenpfade haben idealerweise eine Linienbreite, die dem Abstand benachbarter Emitter und Sensoren entspricht Somit werden jedem Strahlenpfad die entsprechenden Rasterfelder zugeordnet Den Rasterfeldern eines Strahlenpfades werden abhängig davon, ob dieser unterbrochen ist oder nicht über die gesamte Länge ein bestimmter Zahlenwert zugeordnet Die Zuordnung kann beispielsweise die Inkrementierung der Rasterfelder des Strahlenpfads darstellen, wenn dieser nicht unterbrochen ist Ist der Strahlenpfad unterbrochen, werden die Felder inkrementiert Ein Strahlenpfad gilt als unterbrochen, wenn bei aktiviertem Emitter dessen zugeordneter Sensor Strahlung unter einem festgelegten Schwellwert detektiert. Liegt der Wert über dem Schwellwert gilt der Strahlenpfad als nicht unterbrochen. So sind alle Strahlenpfade aller Strahlennetze für alle Emitter auf diese Weise abbildbar. Dadurch wird ein virtuelles Raster mit unterschiedlichen Werten der Rasterfelder erzeugt. Die Auswertung aller Strahlenpfade auf diese Weise, führt dazu, dass im Bereich des unterbrochenen Touchmittels, eine Konzentration der Schnittpunkte unterbrochener Strahlenpfade vorliegt. Demzufolge sind den Rasterfeldern im Bereich der Touchmittel sehr große Werte zugeordnet, wohingegen die Bereiche, in welchen keine Touchmittel im Detektionsbereich sind, nur sehr kleine Zahlenwerte aufweisen.

Vorzugsweise wird zur Verknüpfung der physikalischen Position mit einer virtuellen Cursor-Position ein virtuelles Raster über dem Detektionsbereich erzeugt. Das Raster weist Rasterfelder auf, wobei den Rasterfeldern Werte zugeordnet sind die auf 0 initialisiert werden.

Insbesondere kann dieses Raster als Rastergrafik dargestellt werden. In der Grafik wird jedem Rasterfeld ein Farb- bzw. Grauton entsprechend seinem zugeordneten Wert zugewiesen. In Anbetracht dieser Rastergrafik wird anschaulich, dass ein Quellbild erzeugt wurde, bei dem sich die Position der Touchmittel vom übrigen Detektionsbereich stark im Kontrast unterscheidet Ein entsprechend kontrastiertes Quellbild kann dann von einer standardisierten Tracking-Software ausgewertet werden. Die Rastergrafik stellt lediglich eine, nicht unbedingt notwendige, Vsualisierung des Quellbilds dar. Die Tracking-Software übernimmt im Weiteren die Positionserkennung und Verfolgung der Touchmittel, basierend auf den erzeugten Quellbildern, wodurch eine Interaktion mit dem Anzeigemedium ermöglicht wird.

Besonders vorteilhaft ist es, alle Sensoren zusammen mit einem Emitter zu aktivieren, da dies die Ansteuerung erleichtert und nur einen minimal höheren Energiebedarf zur Folge hat. Die Sensoren werden gleichzeitig mit einem Emitter aktiviert. Ausgewertet werden jedoch nur die, dem entsprechenden Emitter zugeordneten Sensoren, da eine unnötige Auswertung von Sensoren zusätzlich Rechenzeit in Anspruch nähme. Alternativ dazu werden nur die, einem Emitter zugeordneten Sensoren bei dessen Aktivierung aktiviert.

In besonders vorteilhafter Weise werden die Emitter sequentiell aktiviert. Durch die sequentielle Aktivierung der Emitter wird eine Eindeutigkeit des Strahlennetzes eines Emitters gewährleistet und die anschließende Auswertung vereinfacht. Darüber hinaus werden Interferenzen weitgehend vermieden. Weiterhin reduziert diese Art der Aktivierung den Energiebedarf deutlich.

Für jeden Emitter kann abhängig von seinem Abstrahlwinkel, der Größe des Bedienfelds und der Anzahl der Detektoren ein Strahlennetz, wie es bei störungsfreier Ausleuchtung entstehen würde, festgelegt werden.

Zur Verwirklichung des Verfahrens sind elektromagnetische Wellen emittierende Emitter und elektromagnetische Wellen detektierende Sensoren im Randbereich eines Detektionsbereichs vorgesehen.

Darüber hinaus stehen die Sensoren und Emitter mit einer Steuer- und Auswerteeinheit in Verbindung. Aufgrund der Sensorsignale ist eine Störung des optischen Wegs von Emitter zu einem Sensor bestimmbar. Zwischen je einem Emitter und mehreren zugeordneten Sensoren wird ein Strahlennetz aus Strahlenpfaden erzeugt Ein Strahlenpfad beschreibt die direkte Verbindung zwischen einem Emitter und einem seiner zugeordneten Sensoren. Jedem Emitter ist abhängig von seinem Abstrahlwinkel, der Größe des Detektionsbereichs und der Anzahl der Sensoren, ein Strahlennetz, wie es bei störungsfreier Ausleuchtung entstehen würde, zugeordnet Jeder Emitter beleuchtet somit eine festgelegte Anzahl von zugeordneten Sensoren. Je größer der Abstrahlwinkel der Emitter ist, desto besser ist potentiell die Auflösung des Bedienfelds, da mehr Strahlenpfade erzeugt werden können. Durch Einbringen mindestens eines Touchmittels in das Strahlennetz werden Strahlenpfade unterbrochen.

Erfindungsgemäß sind die Sensoren und Emitter mit einem Quellbildgenerator verbunden, durch den ein Quellbild erzeugbar ist. Diesem Quellbild sind Größe und Position der Touchmittel im Detektionsbereich entnehmbar und können durch eine standardisierte Methode ausgewertet werden.

Dies bietet den Vorteil, dass mit einer einfachen Ausgestaltung der Vorrichtung und einer geringen Rechenleistung direkt ein virtuelles Quellbild erzeugbar ist, und aus diesem Quellbild mit Hilfe etablierter Bildverarbeitungssoftware die Verfolgung und Positionsbestimmung von mehreren Touchmitteln erfolgt.

Der Detektionsbereich ist dabei frei in seiner Form festlegbar und kann auf diese Weise gut den Gegebenheiten angepasst werden.

In einer ersten vorteilhaften Ausführungsform können die Emitter und Sensoren in einem Rahmen umlaufend am Rand des Detektionsbereiches angebracht sein. In einem rechteckigen Rahmen sind beispielsweise an allen Seiten des Rahmens sowohl Emitter als auch Sensoren angebracht. Dies ermöglicht die Beleuchtung aus mehr als zwei Richtungen und somit die Identifikation von mehr als zwei Touchmitteln. Darüber hinaus werden durch eine umlaufende Beleuchtung tote Winkel, wie sie bei einer zweiseitigen Beleuchtung in der Nähe der Emitter auftreten, vermieden. Die Auflösung zur Erkennung von Touchmitteln ist deutlich kleiner als der Abstand zwischen zwei optoelektronischen Bauelementen.

Dies gewährleistet die Bestimmung sowie die Verfolgung insbesondere mehrerer Berührpunkte unter Verwendung einer ausgesprochen flexibel einsetzbaren und sehr robusten Bauform. Besonders vorteilhaft an dem Multitouch Bedienfeld ist, dass mehr als zwei Touchmittel gleichzeitig detektierbar sind. Dies hat den Vorteil, dass das Multitouch-Bedienfeld als Eingabemittel für mehrere Personen gleichzeitig dienen kann.

In einer besonders vorteilhaften Ausführungsform sind Sensoren und Emitter abwechselnd angeordnet. Dadurch wird ein besonders dichtes Strahlennetz erzeugt. Dies bietet den Vorteil einer möglichst hohen Auflösung, selbst bei Verwendung von Emittern mit kleinen Abstrahlwinkeln.

In einer weiteren vorteilhaften Ausführungsform sind Emitter und Sensoren in zwei Streifen links und rechts des Detektionsbereichs angebracht. Dies ermöglicht ebenfalls die Beleuchtung aus mehr als zwei Richtungen und somit die Identifikation von mehr als zwei Touchmitteln. Ein besonderer Vorteile dieser Anordnung sind die wesentlich umfangreicheren Möglichkeiten des Gerätedesigns durch den Wegfall des starren Rahmens.

Vorzugsweise sind alle Emitter einzeln und alle Sensoren gemeinsam schaltbar ausgebildet. Dies ermöglicht eine Einzeldurchschaltung aller Emitter, wodurch Interferenzen der Strahlung vermieden werden. Die Sensoren hingegen sind gemeinsam in festlegbaren Clustern gleichzeitig aktivierbar. Sensoren und Emitter sind derart aktivierbar, dass sich die Aktivitätszeiten überschneiden. Darüber hinaus ist je ein Emitter zusammen mit allen Sensoren gleichzeitig aktivierbar. Dies bietet den Vorteil einer einfachen Ansteuerbarkeit Es werden physikalisch mit jedem Emitter alle Sensoren aktiviert, logisch werden aber nur die zugeordneten Sensoren ausgewertet

In vorteilhafter Weise senden die Emitter Strahlung in einem festgelegten Wellenlängenbereich aus. Die Sensoren sind ebenfalls in diesem Bereich empfindlich. Dies kann durch entsprechende Filter unterstützt werden. Auf diese Weise werden Störeinflüsse durch Streulicht aus der Umgebung minimiert. Dies ist besonders dann notwendig, wenn das Bedienfeld auf einen strahlungsemittierenden Hintergrund, wie z.B. einen Monitor, aufgesetzt wird.

Insbesondere arbeitet die Vorrichtung im Wellenlängenbereich mit infraroten Licht Die langwellige Strahlung ist für das menschliche Auge nicht sichtbar, und beeinflusst daher nicht den Blick durch die Detektionsfläche. Darüber hinaus ist infrarote Strahlung energiearm und für den Menschen unschädlich. Weitere Vorteile durch Verwendung der Infrarottechnologie sind, dass diese wasserdicht baubar ist, sowie elektrisch abschirmbar und besonders robust ist Darüber hinaus ist diese Technologie driftfrei und muss daher nicht nachjustiert werden. Weiter ist sie durch eine lange Lebensdauer gekennzeichnet da keine Abnutzung erfolgt. Ein besonderer Vorteil ergibt sich daraus, dass diese Technologie unabhängig vom Material des Touchmittels ist

In einer Ausführungsform ist der Sensor als Fototransistor, der Emitter als LED ausgebildet Dies stellt eine weit verbreitete und daher kostengünstige Lösung für die Übertragung von Strahlung von einem Emitter zu einem Sensor dar.

Dem Sensor kann ein Komparator nachgeschalten sein, welcher den vom Sensor generierten Analogwert aus der detektierten Intensität abhängig eines bestimmten Schwellwerts in einen Digitalwert wandelt. Dies hat den besonderen Vorteil einer ausgesprochen kurzen Verarbeitungszeit Alternativ dazu können auch Sensoren vorgesehen sein, die das Sensorsignal als Analogwert ausgeben.

In einer besonders vorteilhaften Ausführungsform ist das Multitouch-Bedienfeld in Baueinheit mit einem Anzeigeelement ausgeführt Dies stellt ein sehr kompaktes Interak6onsmedium dar.

Weitere Vorteile, Merkmale und Anwendungsmöglichkeiten der Erfindung ergeben sich aus der nachfolgenden Beschreibung in Verbindung mit den in den Zeichnungen dargestellten Ausführungsbeispielen.

Die Erfindung wird im Folgenden anhand des in der Zeichnung dargestellten Ausführungsbeispiels näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet. Es zeigen:
- Fig. 1: eine schematische Darstellung eines Multitouch-Bedienfelds mit einem aktiven Emitter;
- Fig. 2: eine schematische Darstellung eines Multitouch-Bedienfelds, wobei diesem ein virtuelles Raster überlagert ist,
- Fig. 3: eine schematische Darstellung einer Überlagerung aller Strahlennetze aller Emitter;
- Fig. 4: eine Rastergrafik in Graustufen mit zwei Touchmitteln, und
- Fig. 5: eine schematische Darstellung eines Multitouch-Bedienfelds, mit drei Touchmitteln

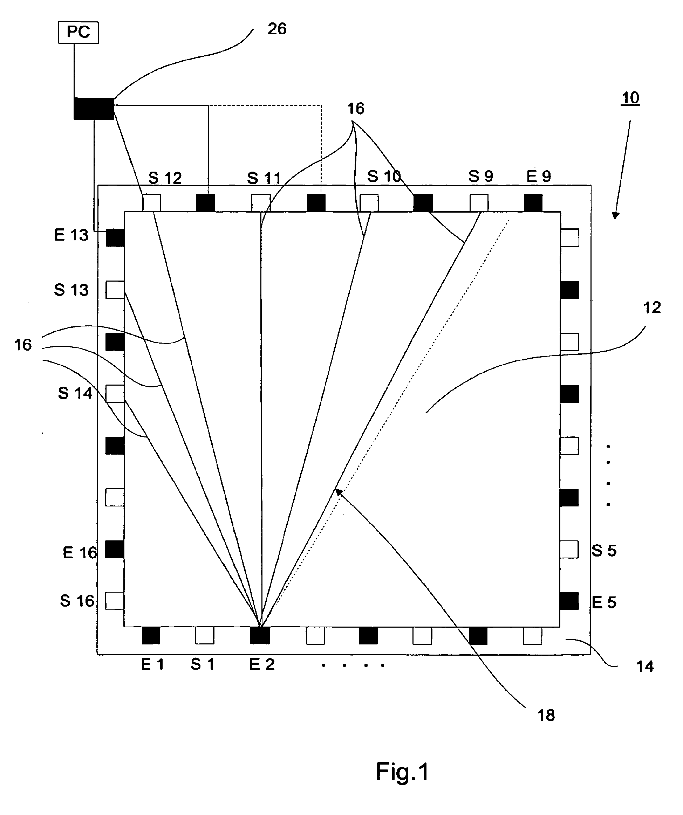

Fig. 1 zeigt die schematische Darstellung eines Multitouch-Bedienfelds mit einem momentan aktiven Emitter E2. Wie gezeigt sind Emitter E1-E16 und Sensoren S1-S16 umlaufend und abwechselnd in einem Rahmen 14 angebracht. Der besseren Übersicht wegen sind nicht alle Emitter und Sensoren explizit benannt In dieser Ausführungsform sind Sensoren und Emitter für einen infraroten Arbeitsbereich ausgelegt Der Rahmen 14 schließt einen Detektionsbereich 12 ein. Die Emitter E1-E16 weisen einen Abstrahlwinkel von 60° auf. In Fig. 1 ist ein Strahlennetz 18 des Emitters E2 dargestellt Das Strahlennetz 18 umfasst Strahlenpfade 16, wobei ein Strahlenpfad 16 die direkte Verbindung eines Emitters E zu einem zugeordneten Sensor S beschreibt. Zugeordnete Sensoren S des aktiven Emitters E2 sind die durch den Abstrahlwinkel des Emitters E2 und die Lage der Sensoren S festgelegt In diesem Ausführungsbeispiel sind dem Emitter E2 die Sensoren S9 bis S 14 zugeordnet. Demzufolge verläuft ein Strahlenpfad 16 vom Emitter E2 zum Sensor S12. Wie Fig. 1 weiter zu entnehmen ist sind die Strahlenpfade 16 nicht durch ein Touchmittel unterbrochen. Daher detektieren alle Sensoren S9-S14 eine Lichtintensität über einem festgelegten Schwellwert Zudem sind alle Emitter E1-E16 und Sensoren S1-S16 mit einem Quellbildgenerator 26 verbunden, der das Quellbild durch Ansteuerung der Emitter E1-E16 und Auswertung der Sensoren S1-S16 erzeugt und beispielsweise mit einem PC, der wiederum mit der zu steuernden Anzeige in Verbindung steht, verbunden ist Aus Gründen der Übersichtlichkeit, sind nicht alle Verbindungen zwischen Quellbildgenerator 26 und den Emittern E und Sensoren S dargestellt

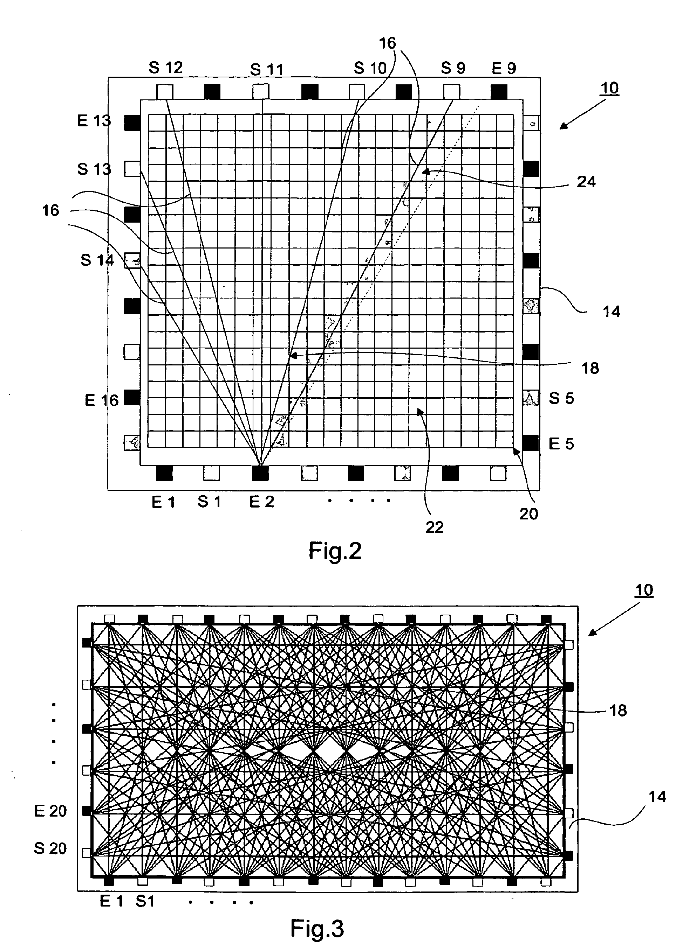

Fig. 2 zeigt die Draufsicht auf Darstellung eines Multitouch-Bedienfelds über das ein virtuelles Raster 20 gelegt ist. Das virtuelle Raster 20 weist Rasterfelder 22 auf. Aus Gründen der Übersichtlichkeit ist nur ein Rasterfeld stellvertretend für alle Rasterfelder mit dem Bezugszeichen 22 gekennzeichnet Der Strahlenpfad 16 zwischen Emitter E2 und dem Sensor S9 wird exemplarisch auf das virtuelle Raster 20 abgebildet, d.h. er wird gerastert Die grau hinterlegten Rasterfelder 22 stellen somit eine Rasterung des Strahlenpfads 24 dar. Durch Änderung der Werte der Rasterfelder 22 entlang eines Strahlenpfads 16 (Rasterung des Strahlenpfads 24) werden sogenannte "maps" erzeugt Werden beispielsweise die Werte der Rasterfelder 22 der unterbrochenen Strahlenpfade 16 um 1 erhöht, bzw. die nicht unterbrochenen um 0 entsteht eine sogenannte "negativ-map". Alternativ dazu wird eine sogenannte "positive-map" erzeugt, wenn die Werte der Rasterfelder 22 entlang eines nicht unterbrochenen Strahlenpfades 16 um 1 bzw. die unterbrochenen um 0 erhöht werden. Auf diese Weise werden die Werte der Rasterfelder 22 für alle Strahlenpfade 16 aller Strahlennetze 18 für alle Emitter E angepasst.

Fig. 3 zeigt eine Überlagerung aller Strahlennetze 18 aller Emitter E eines Multitouch-Bedienfelds 10. In dieser Figur sind 20 Emitter E und 20 Sensoren S dargestellt Die Emitter E und Sensoren S sind abwechselnd umlaufend in einem Rahmen 14 angeordnet Die Auflösung des Multitouch-Bedienfelds entspricht hier dem halben Abstand zweier optoelektronischer Bauteile.

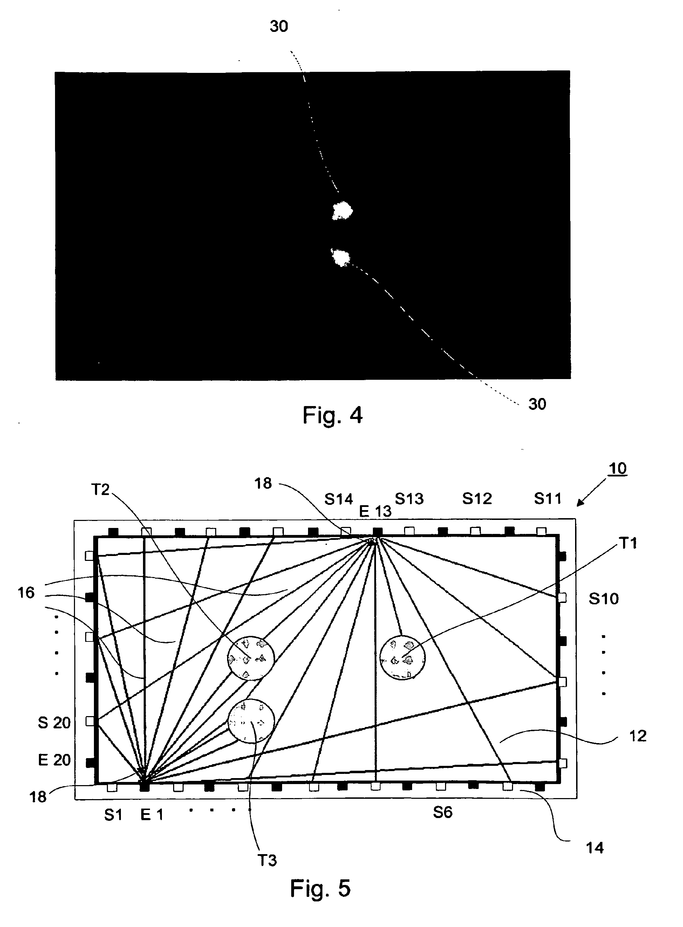

Fig. 4 zeigt die Visualisierung eines Quellbildes in Form einer Graustufen Rastergrafik mit zwei Touchmittelpositionen 30. Mit Hilfe dieses Quellbildes kann über eine Tracking-Software die Position der Touchmittel bestimmt und deren Bewegung verfolgt werden. Dieses Quellbild entspricht einer "negative-map". Dafür werden die Rasterfelder der unterbrochenen Strahlenpfade inkrementiert Aufgrund der vielen Schnittpunkte von unterbrochenen Strahlenpfaden im Bereich der eingebrachten Touchmittel, sind diese an der entsprechenden Position deutlich entnehmbar und können leicht erkannt und verfolgt werden.

In Fig. 5 ist schematisch ein Multitouch-Bedienfeld 10 dargestellt, welches durch drei Touchmittel T1, T2, T3 unterbrochen ist. Das Multitouch-Bedienfeld 10 weist 20 Emitter E1-E20 und 20 Sensoren S1-S20 auf, die abwechselnd umlaufend in einem Rahmen 14 angeordnet sind. In der Darstellung sind zwei Momentaufnahmen überlagert. Schwarz dargestellt sieht man zu einem Zeitpunkt t1 das Strahlennetz 18 des Emitters E1, sowie die durch die drei Touchmittel T1, T2, T3 unterbrochenen und nicht unterbrochenen Strahlenpfade 16. Weiterhin ist das Strahlennetz 18 des Emitters E13 in grau dargestellt Der Emitter E13 ist zu einem Zeitpunkt t2 aktiv. Für dieses Strahlennetz 18 sind ebenfalls die unterbrochenen und nicht unterbrochenen Strahlenpfade 16 dargestellt So ist der Strahlenpfad 16 vom Emitter E13 zu Sensor S6 von einem ersten Touchmittel T1 unterbrochen, die Strahlenpfade 16 zu den Sensoren S1 und S2 von einem zweiten Touchmittel T2 unterbrochen. Ein drittes Touchmittel T3 wird durch das Strahlennetz 18 des Emitters E13 nicht erkannt. Das dritte Touchmittel T3 blockiert jedoch Strahlenpfade 16 des Strahlennetzes 18 des Emitters E1. Wie in Fig. 5 zu entnehmen, werden die Strahlenpfade 16 von Emitter E1 zu den Sensoren S10-S12 unterbrochen. Weiter werden die Strahlenpfade 16 von Emitter E1 zu den Sensoren S13 und S14 vom zweiten Touchmittel T2 unterbrochen. Das erste Touchmittel T1 wird vom Strahlennetz 18 des ersten Emitters E1 nicht erkannt Die weiter eingezeichneten Strahlenpfade 16 der Emitter E1 und E13 treffen ungebrochen auf die jeweiligen Sensoren S.

Durch die umlaufende Anordnung der Sensoren und Emitter und durch die gestreute Strahlung von einem Emitter zu mehreren Sensoren ist eine eindeutige Detektion und Verfolgung insbesondere mehrerer in den Detektionsbereich des Multitouch-Rahmens eingebrachten Touchmittel möglich.

### Bezugszeichenliste

- 10: Multitouch-Bedienfeld
- 12: Detektionsbereich
- 14: Rahmen
- 16: Strahlenpfad
- 18: Strahlennetz
- 20: virtuelles Raster
- 22: Rasterfeld
- 24: Rasterung Strahlenpfad
- 26: Quellbildgenerator
- 30: Touchmittelpositionen

- E: Emitter
- S: Sensor
- T1: Erstes Touchmittel
- T2: Zweites Touchmittel
- T3: Drittes Touchmittel

## Patentansprüche

1. Verfahren zur Erzeugung eines Quellbildes von einem Detektionsbereich (12), wobei dem Quellbild die Position mindestens eines Touchmittels (T₁, T₂, T₃) innerhalb des Detektionsbereichs (12) entnehmbar ist, und die Position des Touchmittels (T₁, T₂, T₃) mit Hilfe einer Tracking-Software auswertbar und verfolgbar ist, wobei das Quellbilds erzeugt wird, indem Emitter (E) und Sensoren (S) für elektromagnetische Wellen vorgesehen sind, die im Wesentlichen in einer Ebene um den Detektionsbereich (12) angeordnet sind, wobei die Emitter (E) mit den zugeordneten Sensoren (S) durch Strahlenpfade (16) verbunden sind, und die Abbildung der Touchmittel (T₁, T₂, T₃) im Quellbild durch die Auswertung der durch die Touchmittel (T₁, T₂, T₃) unterberochenen Strahlenpfade (16) erfolgt, ferner das Quellbild in Form eines virtuellen Rasters (20) über die Projektion des Detektionsbereichs (12) auf eine Anzeigeoberfläche gelegt wird, wobei das virtuelle Raster (20) Rasterfelder (22) aufweist, welchen Werte zuordenbar sind und die Strahlenpfade (16) auf das virtuelle Raster (20) abgebildet werden, **dadurch gekennzeichnet, dass** die Werte der Rasterfelder (22) entlang eines Strahlenpfades (16) inkrementiert werden, wenn der zugeordnete Sensor (S) Strahlung über einem bestimmten Schwellwert detektiert

2. Verfahren nach dem Oberbegriff des Anspruchs 1, **dadurch gekennzeichnet, dass** die Werte der Rasterfelder (22) entlang eines Strahlenpfades (16) inkrementiert werden, wenn der zugeordnete Sensor (S) Strahlung unter einem bestimmten Schwellwert detektiert

3. Verfahren nach Anspruch 1 oder 2, **dadurch gekennzeichnet, dass** das virtuelle Raster (20) als Rastergrafik ausgewertet wird.

4. Verfahren nach einem der vorangehenden Ansprüche, **dadurch gekennzeichnet, dass** auf die Rastergrafik ein Filterverfahren angewendet wird.

5. Verfahren nach einem der vorangehenden Ansprüche, **dadurch gekennzeichnet, dass** eine Berechnung der Anzahl und der Positionen der Mittelpunkte der durch Touchmittel (T₁, T₂, T₃) verursachten Unterbrechungen erfolgt.

6. Verfahren nach einem der vorangehenden Ansprüche, **dadurch gekennzeichnet, dass** je ein Emitter (E) gleichzeitig mit allen Sensoren (S) aktiviert wird.

7. Verfahren nach einem der vorangehenden Ansprüche, **dadurch gekennzeichnet, dass** je ein Emitter (E) gleichzeitig mit den ihm zugeordneten Sensoren (S) aktiviert wird.

8. Verfahren nach einem der vorangehenden Ansprüche, **dadurch gekennzeichnet, dass** die dem aktiven Emitter (E) zugeordneten Sensoren (S) ausgewertet werden.

9. Verfahren nach einem der vorangehenden Ansprüche, **dadurch gekennzeichnet, dass** alle Emitter (E) sequentiell aktiviert werden.

## Claims

1. A method for generating a source image from a detection zone (12), wherein the position of at least one touch means (T₁, T₂, T₃) within said detection zone (12) can be gathered from said source image, and wherein such position of said touch means (T₁, T₂, T₃) can be evaluated and tracked using tracking software, said source image being generated using emitters (E) and sensors (S) for electromagnetic waves which are essentially disposed in a plane around said detection zone (12), said emitters (E) being connected with the associated sensors (S) through radiation paths (16), and the mapping of said touch means (T₁, T₂, T₃) in the source image is accomplished through evaluation of all the radiation paths (16) interrupted by the touch means (T₁, T₂, T₃), in which said source image is furthermore superimposed, in the form of a virtual grid (20), on the projected image of the detection zone (12) on a display surface, said virtual grid (20) has grid fields (22) to which values can be assigned, and said radiation paths (16) are mapped onto said virtual grid (20) **characterized in that** the values of the grid fields (22) will be incremented along a radiation path (16) if the associated sensor (S) detects radiation above a certain threshold.

2. The method as claimed in the preamble of claim 1 **characterized in that** the values of said grid fields (22) will be incremented along a radiation path (16) if the associated sensor (S) detects radiation above a certain threshold.

3. The method of one of claims 1 or 2 **characterized in that** said virtual grid (20) is evaluated as a bit-mapped graphic.

4. The method of one of the preceding claims **characterized in that** a filter procedure is performed on said bit-mapped graphic.

5. The method of one of the preceding claims **characterized in that** the number and positions of the centre points of the interruptions caused by said touch means (T₁, T₂, T₃) are calculated.

6. The method of one of the preceding claims **characterized in that** one emitter (E) at a time is simultaneously activated with all the sensors (S).

7. The method of one of the preceding claims **characterized in that** one emitter (E) at a time is simultaneously activated with its assigned sensors (S).

8. The method of one of the preceding claims **characterized in that** the sensors (S) assigned to the active emitter (E) will be evaluated.

9. The method of one of the preceding claims **characterized in that** all emitters (E) will be activated sequentially.

## Revendications

1. Procédé de génération d'une image source d'une zone de détection (12), la position d'au moins un moyen tactile (T1, T2, T3) dans la zone de détection (12) pouvant être prélevée à partir de l'image source et la position du moyen tactile (T1, T2, T3) pouvant être analysée et suivie à l'aide d'un logiciel de suivi, l'image source étant obtenue en mettant en place des émetteurs (E) et capteurs (S) d'ondes électromagnétiques essentiellement disposés sur un plan autour de la zone de détection (12), les émetteurs (E) étant reliés aux capteurs (S) qui leur sont assignés par des faisceaux (16) et l'illustration des moyens tactile (T1, T2, T3) dans l'image source étant réalisée grâce à l'analyse des faisceaux (16) interrompus par les moyens tactiles (T1, T2, T3), et l'image source étant en outre disposée, sous la forme d'une grille virtuelle (20), par-dessus la projection de la zone de détection (12) sur une surface d'affichage, la grille virtuelle (20) comportant des cellules (22) auxquelles des valeurs peuvent être assignées et les faisceaux (16) étant représentés sur la grille virtuelle (20), **caractérisé en ce que** les valeurs des cellules sont incrémentées le long d'un faisceau (16) lorsque le capteur (S) assigné détecte un rayonnement dépassant un seuil précis.

2. Procédé selon le préambule de la revendication 1, **caractérisé en ce que** les valeurs des cellules sont incrémentées le long d'un faisceau (16) lorsque le capteur (S) assigné détecte une radiation dépassant un seuil précis.

3. Procédé selon les revendications 1 ou 2, **caractérisé en ce que** la grille virtuelle (20) est analysée comme graphique tramé.

4. Procédé selon les revendications précédentes, **caractérisé en ce qu'**un procédé de filtrage est appliqué sur le graphique tramé.

5. Procédé selon l'une des revendications précédentes, **caractérisé en ce qu'**a lieu un calcul du nombre et des positions des points centraux des interruptions engendrées par le moyen tactile (T1, T2, T3).

6. Procédé selon l'une des revendications précédentes, **caractérisé en ce qu'**à chaque fois, un émetteur (E) est activé en même temps que tous les capteurs (S).

7. Procédé selon l'une des revendications précédentes, **caractérisé en ce que** chaque émetteur (E) est activé en même temps que le capteur (S) qui lui est assigné.

8. Procédé selon l'une des revendications précédentes, **caractérisé en ce que** les capteurs assignés à l'émetteur (E) activé sont analysés.

9. Procédé selon l'une des revendications précédentes, **caractérisé en ce que** tous les émetteurs (E) sont activés de façon séquentielle.
